# EUROPÄISCHE PATENTANMELDUNG

(11) **EP 2 169 581 A2**
(43) Veröffentlichungstag der Anmeldung: **31.03.2010**
(21) Anmeldenummer: 09170887.5
(22) Anmeldetag: 21.09.2009
(51) Int. Cl.: G06F 21/00

(54) **Anordnung und Verfahren zum Übertragen von Mediadateien insbesondere über Internet sowie Wiedergabegerät zum Wiedergeben kopiergeschützter Mediadateien**

(30) Priorität: 19.09.2008 DE 102008048093
(71) Anmelder: Siedler, Martin, 48599 Gronau (DE); Mohr, Holger, 48599 Gronau (DE); Akturk, Mesut, 48599 Gronau (DE)
(72) Erfinder: Siedler, Martin, 48599 Gronau (DE); Mohr, Holger, 48599 Gronau (DE); Akturk, Mesut, 48599 Gronau (DE)
(74) Vertreter: Kreutzer, Ulrich

(57) **Zusammenfassung**

Es werden eine Anordnung und ein Verfahren zum Übertragen von Mediadateien insbesondere über Internet angegeben, mittels welcher die Urheberrechte von Künstlern sicher dadurch gewahrt werden können, daß die Mediadateien nicht unkontrolliert kopier- und wiedergebbar sind. Dazu umfaßt eine Anordnung ein Anbietersystem (10), das über Mediadateien und Kundendaten verfügt, wobei in den Kundendaten jedem Kunden wenigstens ein Kundenidentifikationscode und eine bestimmte Nutzungsberechtigung zugeordnet sind, und wenigstens ein Nutzersystem (12) mit mindestens einem Identifikationsmodul (26), in dem ein Kundenidentifikationscode gespeichert ist, wobei das Nutzersystem zum Anfordern und Empfangen von Mediadateien mit dem Anbietersystem insbesondere über Internet verbindbar ist, wobei das Anbietersystem dazu ausgebildet ist, bei Anforderung einer Mediadatei seitens eines Nutzersystems den Kundenidentifikationscode von dem wenigstens einen Identifikationsmodul abzufragen, und ein Verschlüsselungsmodul (18) umfaßt, mittels welchem eine von einem Nutzersystem angeforderte Mediadatei vor der Übertragung an das anfordernde Nutzersystem kundenspezifisch verschlüsselbar ist, und wobei das Verschlüsselungsmodul dazu ausgebildet ist, die kundenspezifische Verschlüsselung einer angeforderten Mediadatei so auszuführen, daß die Mediadatei nur dann nutzersystemseitig wiedergegeben werden kann, wenn ein zur Entschlüsselung der Mediadatei berechtigendes Identifikationsmodul präsent ist.

## Beschreibung

### TECHNISCHES GEBIET DER ERFINDUNG

Die Erfindung betrifft eine Anordnung und ein Verfahren zum Übertragen von Mediadateien insbesondere über Internet von einem Anbietersystem eines Anbieters von Mediadateien zu wenigstens einem Nutzersystem eines Kunden des Anbieters, wobei die Anordnung ein Anbietersystem, das über Mediadateien und Kundendaten verfügt, wobei in den Kundendaten jedem Kunden wenigstens ein Kundenidentifikationscode und eine bestimmte Nutzungsberechtigung zugeordnet sind, und mindestens ein Nutzersystem mit mindestens einem ldentifikationsmodul, in dem ein Kundenidentifikationscode gespeichert ist, umfaßt und wobei das Nutzersystem zum Anfordern und Empfangen von Mediadateien mit dem Anbietersystem insbesondere über Internet verbindbar ist.

Die Erfindung betrifft auch ein Wiedergabegerät, das zum Wiedergeben kopiergeschützter Mediadateien ausgebildet ist.

Dabei werden hier unter dem Begriff "Mediadateien" sowohl einzelne, abgeschlossene Dateien wie zum Beispiel MP3-, MP4-, oder DIVX-Dateien, die für sich genommen z.B. ein komplettes Musikstück beinhalten, als auch Datensätze verstanden, wie sie z.B. beim Audio- und Videostreaming verwendet werden.

### HINTERGRUND DER ERFINDUNG

Durch die Digitaltechnik und insbesondere die Schaffung komprimierter Dateiformate wie MP3 und MP4 ist es möglich geworden, einmal digitalisierte und in Form von nachfolgend als Mediadateien bezeichneten digitalen Dateien vorliegende Musikstücke, Hörspiele, Bücher und Hörbücher, Fotographien, Artikel, Diashows, Filme, Audio- und Videostreams und dergleichen beliebig oft verlustfrei zu kopieren. Durch die hinsichtlich der pro Zeiteinheit übertragbaren Datenmengen immer leistungsfähiger werdenden Kanäle wie E-Mail und Internet ist es zudem möglich geworden, kopierte Mediadateien schnell weltweit zu verbreiten. Dies hat sich insbesondere für die Musik- und Filmbranche als sehr problematisch erwiesen. Es gibt zwar Portale, von denen Mediadateien kostenpflichtig heruntergeladen werden können, so daß die zur Geltendmachung von Verbreitungsrechten wie Urheberrechten berechtigten Personen und Firmen bei einem solchen Herunterladen zumindest einmal partizipieren, die heruntergeladenen Dateien sind jedoch hinsichtlich ihrer weiteren Verbreitung praktisch ungeschützt.

Zur zumindest partiellen Lösung des Problems ist es durch die Firma Apple Inc., USA, bekannt, Mediadateien in einem firmenspezifischen Dateiformat zum Download anzubieten, so daß die Dateien nur auf firmenspezifischen Geräten und auf herkömmlichen Personalcomputern, auf denen ein entsprechendes Programm installiert ist, wiedergegeben werden können. Dabei kann ein Nutzer das benötigte Wiedergabeprogramm auf zum Zeitpunkt dieser Anmeldung maximal fünf PCs lauffähig installieren. Die gekauften Mediadateien können jedoch auf beliebig vielen firmenspezifischen Wiedergabegeräten wiedergegeben werden, nicht jedoch ohne weiteres auf beliebigen Wiedergabegeräten wie Mobiltelefonen, DVD-Playern u.dgl. Allerdings ist es möglich, die gekauften Mediadateien auf CD-Rom zu brennen, wobei sie in ein anderes digitales Dateiformat umgewandelt werden, das dann selbst wiederum beliebig oft kopiert werden kann, wodurch der gewünschte Kopierschutz ausgeschaltet ist.

Aus der US 2001/0052077 A1 ist eine Anordnung zum Übertragen von Mediadateien über Internet von einem Anbietersystem zu einem Nutzersystem bekannt, wobei das Anbietersystem über Mediadateien und Kundendaten verfügt, wobei in den Kundendaten jedem Kunden wenigstens ein Kundenidentifikationscode und eine bestimmte Nutzungsberechtigung zugeordnet sind, und wobei wenigstens ein Nutzersystem mindestens ein Identifikationsmodul aufweist, in dem ein Kundenidentifikationscode gespeichert ist, wobei das Nutzersystem zum Anfordern und Empfangen von Mediadateien mit dem Anbietersystem insbesondere über Internet verbindbar ist. Diese Anordnung hat jedoch den Nachteil, daß dabei der Identifikationscode notwendig gerätespezifisch ist und die Mediadateien dann dementsprechend nur gerätespezifisch wiedergeben werden können.

Daneben sind noch Mobiltelefone bekannt, die als Wiedergabegeräte dienen können. Diese werden meist mit einem Rechner verbunden, wobei dann Mediadateien vom Rechner zum Mobiltelefon übertragen werden. Je nach Hersteller liegen die auf dem Mobiltelefon abspielbaren Mediadateien in Form von offenen, d.h. herstellerunabhängigen Formaten wie MP3, oder herstellerspezifischen Formaten vor, sind jedoch in der Regel problemlos kopier-und zumindest auf bauartgleichen Wiedergabegeräten wiedergebbar.

Zum Schutz vor unerlaubtem Kopieren sind schließlich noch sog. "Dongles" bekannt, bei denen jedoch keine Verschlüsselung der zu schützenden Software erfolgt, sondern vielmehr fortlaufend das Vorhandensein eines zur Ausführung der Software berechtigenden Hardwarebauteils, eben des sog. Dongle, geprüft wird.

### AUFGABE UND ZUSAMMENFASSUNG DER ERFINDUNG

Der Erfindung liegt die Aufgabe zugrunde, eine Anordnung und ein Verfahren zum Übertragen von Mediadateien über Internet anzugeben, mittels welcher die Urheberrechte von Künstlern sicher dadurch gewahrt werden können, daß die Mediadateien nicht unkontrolliert kopier- und wiedergebbar sind. Zudem soll die Erfindung ein Wiedergabegerät angeben, mittels welchem kopiergeschützte Mediadateien wiedergebbar sind.

Die Aufgabe wird gelöst von einer Anordnung mit den Merkmalen des Anspruchs 1 bzw. einem Verfahren mit den Merkmalen des Anspruchs 7. Der nebengeordnete Anspruch 14 betrifft ein Wiedergabegerät zur Wiedergabe erfindungsgemäß übertragener Mediadateien. Die Unteransprüche enthalten vorteilhafte Ausgestaltungen und Weiterbildungen der Gegenstände der unabhängigen Ansprüche, auf die sie rückbezogen sind.

Weitere Einzelheiten und Vorteile der Erfindung ergeben sich aus der nachfolgenden rein beispielhaften und nicht-beschränkenden Beschreibung bevorzugter Ausführungsformen.

### KURZE BESCHREIBUNG DER ZEICHNUNGEN

- Fig. 1: zeigt stark schematisiert eine erste Ausführungsform einer möglichen Anordnung zur kopiergeschützten Übertragung von Mediadateien über Internet, wobei ein Nutzersystem ein Wiedergabegerät umfaßt, das über einen PC und Internet mit einem Anbietersystem verbindbar ist.
- Fig. 2: zeigt stark schematisiert ein zweites Ausführungsbeispiel einer erfindungsgemäßen Anordnung mit einem Wiedergabegerät, wobei das Wiedergabegerät über Mittel verfügt, um direkt über Internet eine Verbindung mit einem Anbietersystem herzustellen.
- Fig. 3: zeigt stark schematisiert eine dritte Ausführungsform einer erfindungsgemäßen Anordnung, wobei das Nutzersystem mehrere Wiedergabegeräte umfaßt, wobei jedoch nur ein Identifikationsmodul vorhanden ist.

### BESCHREIBUNG BEVORZUGTER AUSFÜHRUNGSFORMEN

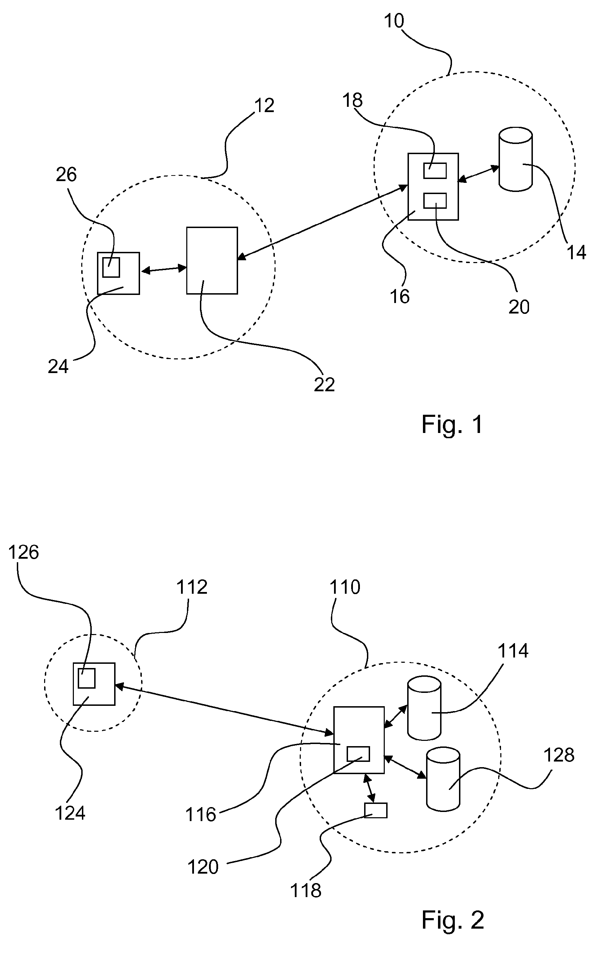

In der Fig. 1 ist ein erstes Ausführungsbeispiel einer Anordnung zum Übertragen von Mediadateien insbesondere über Internet von einem Anbietersystem zu einem Nutzersystem 12 stark schematisiert dargestellt. Sowohl das Anbietersystem 10 als auch das Nutzersystem 12 sind durch gestrichelte Kreise symbolisiert, wobei beide Systeme eine Vielzahl weiterer, hier nicht gezeigter Komponenten umfassen können, wie insbesondere Ein- und Ausgabegeräte wie Tastaturen, Bildschirme und Drucker, sowie die übliche Hardware zur Herstellung einer Verbindung zwischen beiden Systemen insbesondere über Internet, was sowohl drahtlos als auch drahtgebunden erfolgen kann. Da die Erfindung sich primär damit beschäftigt, wie Mediadateien vor unberechtigtem Kopieren und Wiedergeben geschützt werden können, wird auf diese an sich bekannten Komponenten hier nicht detailliert eingegangen, da die Ausgestaltung und Anwendung der genannten Komponenten zum allgemeinen Fachwissen auf dem hier in Frage stehenden technischen Gebiet gehört.

Das Anbietersystem umfaßt bei diesem Ausführungsbeispiel eine Datenbank 14, in der Mediadateien und Kundendaten gespeichert sind, und auf die von einer zentralen Steuereinheit 16 aus zugegriffen werden kann. Dabei wird unter dem Begriff Mediadatei eine Datei verstanden, die ein in der Regel urheberrechtlich geschütztes Werk wie insbesondere ein Musikstück, ein Hörspiel, ein Buch, ein Hörbuch, eine Fotografie, einen Zeitschriften- oder Zeitungsartikel, eine Diashow, einen Film, ein Video und dergleichen enthält oder zumindest einen Teil eines solchen Werkes oder einer Live-Sendung enthält, z.B. ein Datenpaket beim Audio-oder Videostreaming, wobei die Sendung oder das Werk in der Regel gegen Entgelt einem Nutzer eines Nutzersystems kopiergeschützt verfügbar gemacht werden soll.

Die Kundendaten enthalten wenigstens einen Kundenidentifikationscode, über den ein Kunde des Anbieters identifizierbar ist, wobei jeder Kunde über bestimmte Nutzungsberechtigungen verfügt. Vorteilhaft können in den Kundendaten auch Informationen über das oder die kundenseitig vorhandenen bzw. gerade verwendeten Wiedergabegeräte/Systemeinstellungen und/oder Informationen über bestimmte kundenspezifische Interessen gespeichert sein. Damit wird es möglich, die eine zu übertragene Mediadatei dem Wiedergabegerät bzw. den aktuellen Systemeinstellungen z.B. hinsichtlich Auslösung oder Speichergröße anzupassen und/oder bestimmte Mediadateien bevorzugt anzuzeigen oder dem Kunden gezielt vorzuschlagen. Informationen über verwendete Wiedergabegeräte und/oder aktuelle Systemeinstellungen können aber auch beim Verbinden des Nutzersystems mit dem Anbietersystem übermittelt werden.

Die zentrale Steuereinheit 16 umfaßt bei diesem Ausführungsbeispiel ein Verschlüsselungsmodul 18 und ein Abrechnungsmodul 20. Dabei sei an dieser Stelle betont, daß solche Module, wie im übrigen auch das nutzersystemseitig verwendete ldentifikationsmodul, auf das noch eingegangen wird, sowohl softwareals auch hardwaremäßig sowie teils soft-, teils hardwaremäßig realisiert werden können. Auf die Funktionsweise der Module wird nachfolgend noch eingegangen.

Das Nutzersystem 12 umfaßt bei diesem Ausführungsbeispiel einen PC 22, ein mit dem PC 22 verbindbares Wiedergabegerät 24 und ein bei diesem Ausführungsbeispiel in das Wiedergabegerät 24 integriertes ldentifikationsmodul 26, in dem ein Kundenidentifikationscode gespeichert ist.

Das Wiedergabegerät 24 kann nach Art bekannter sogenannter "Mediaplayer" ausgestaltet sein, also über Kopfhörer- bzw. Lautsprecherausgänge und/oder ggf. eigene Lautsprecher und, je nach Art der wiederzugebenden Mediadateien, auch über ein z.B. zur Wiedergabe von Videos geeignetes Display und/oder einen Bildschirmausgang verfügen. Die genannten Ausgänge können auch in Form eines gemeinsamen Ausgangs, z.B. eines USB-Ausgangs ausgebildet sein. Zudem umfaßt das Wiedergabegerät 24 in an sich bekannter Weise Bedienmittel, wie Schalter und/oder Tasten, ggf. auch in Form berührungssensitiven Flächen.

In das Wiedergabegerät 24 ist bei diesem Ausführungsbeispiel das ldentifikationsmodul 26 in Form einer Smartcard integriert. Das ldentifikationsmodul kann jedoch auch zumindest partiell softwaremäßig realisiert sein. Insbesondere ist es möglich, ldentifikationsmodule in Form sogenannter SIM-Karten zu verwenden, vorzugsweise in Form von SIM-Karten, die auch zur Nutzung eines Mobilfunknetzes berechtigen.

In dem ldentifikationsmodul ist ein Kundenidentifikationscode gespeichert, der nutzersystemspezifisch ist, wie nachfolgend noch dargelegt wird. Dabei meint der Terminus "gespeichert", daß der Kundenidentifikationscode in dem Modul in maschinenauslesbarer Form realisiert ist, so daß er dann, wenn nutzersystemseitig bei dem Anbietersystem eine Mediadatei abgefragt wird, der Kundenidentifikationscode auslesbar und an das Anbietersystem übertragbar ist. Dabei kann vorgesehen sein, daß der Kundenidentifikationscode in dem Identifikationsmodul derart verschlüsselt ist, daß er nur anbietersystemseitig ausgelesen werden kann. Bei einer bevorzugten Ausführungsform ist jedoch vorgesehen, daß in dem Identifikationsmodul wenigstens zwei Codes gespeichert sind, von denen einer als Kundenidentifikationscode für das Nutzersystem dient und quasi beliebig auslesbar ist. Dieser Code wird beim Anfordern einer Mediadatei mittels des Nutzersystems an das Anbietersystem übertragen. Der zweite in dem Identifikationsmodul gespeicherte Code dient zur Verschlüsselung und Entschlüsselung der Mediadatei und ist vor unberechtigtem Auslesen geschützt. Auch wird er beim Anfordern von Mediadateien nicht übertragen, ist aber anbietersystemseitig bekannt oder aus den bekannten Kundendaten generierbar. Auf die genaue Funktionsweise wird nachfolgend noch eingegangen.

Bei dem in Fig. 1 gezeigten Ausführungsbeispiel dient der PC 22 zum Aufbau einer Internetverbindung zu dem Anbietersystem, genauer gesagt zu der zentralen Steuereinheit 16 des Anbietersystems. Vorteilhaft kann der PC auch zur bequemen Bedienung des Wiedergabegerätes, insbesondere zur Vornahme bestimmter Benutzereinstellungen dienen, denn das Wiedergabegerät wird in der Regel möglichst handlich ausgebildet, so daß sowohl die ggf. an dem Wiedergabegerät vorgesehen Eingabemittel als auch die Ausgabemittel wie z.B. ein Display im Vergleich zu einem normalen Computerbildschirm oder einer normalen Computertastatur sehr klein ausgebildet sein werden.

In der Fig. 2 ist eine Ausführungsvariante der in Fig. 1 gezeigten Anordnung dargestellt, wobei das Wiedergabegerät 124 bei diesem Ausführungsbeispiel so ausgebildet ist, daß es direkt eine Internetverbindung mit dem Anbietersystem 110, genauer gesagt mit der zentralen Steuereinheit 116 des Anbietersystems herzustellen vermag.

Das Wiedergabegerät 124 kann nach Art eines Mobiltelefons ausgebildet sein und über eine entsprechende Mobiltelefonfunktionalität verfügen. Ist das Wiedergabegerät 124 als Mobiltelefon ausgebildet, kann es sich bei dem Identifikationsmodul 126 um eine SIM-Karte handeln, die auch zur Nutzung eines Mobilfunknetzes berechtigt. Es kann aber auch vorgesehen sein, daß in das Wiedergabegerät ein Identifikationsmodul zur Nutzung von Mediadateien integriert ist und es zusätzlich über eine Aufnahme für eine handelsübliche SIM-Karte zur Teilnahme an einem Mobilfunknetz verfügt. Auch kann es vorgesehen sein, daß Identifikationsmodul zum Funktionieren durch eine handelsübliche SIM-Karte ergänzt werden muß.

Das Anbietersystem 110 umfaßt bei diesem Ausführungsbeispiel wiederum eine zentrale Steuereinheit 116, die eingehende Anforderungen handhabt, und insbesondere die Berechtigung eines Nutzersystems, überhaupt Mediadateien zu empfangen, prüft. Wenngleich für den Fachmann klar ist, wie eine solche Steuereinheit einschließlich der bereits erwähnten Module auszubilden ist, ist bei der in Fig. 2 gezeigten Ausführungsvariante zur Verdeutlichung möglicher Variationen ein Verschlüsselungsmodul 118 dargestellt, das nicht in die zentrale Steuereinheit 116 integriert ist, aber von dieser bei der Ausführung des nachfolgend noch beschriebenen erfindungsgemäßen Verfahrens angesprochen wird.

Ebenfalls zur rein beispielhaften Verdeutlichung verschiedener möglicher Ausführungsvarianten sind bei dem in Fig. 2 gezeigten Beispiel zwei Datenbanken 114 und 128 vorgesehen, von denen die eine zur Speicherung von Mediadateien, die andere zur Aufzeichnung von Kundendaten und Abrechnungsinformationen, die mittels eines Abrechnungsmoduls 120 erzeugt werden, dient.

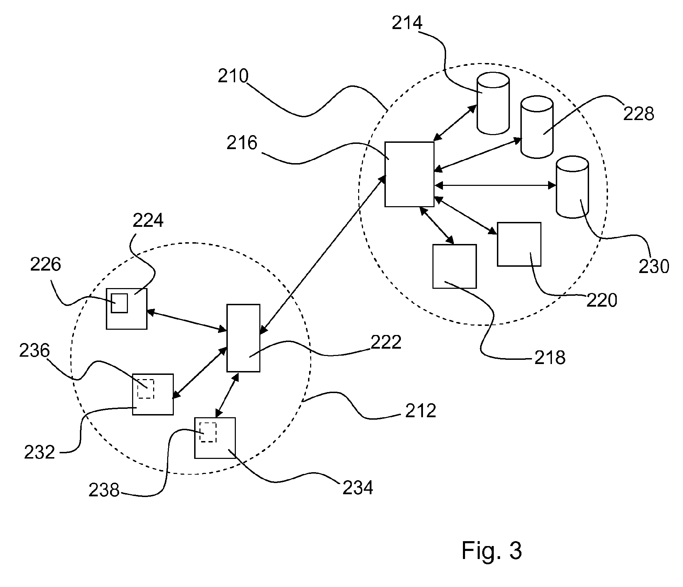

In Fig. 3 ist schematisch eine dritte Ausführungsvariante einer erfindungsgemäßen Anordnung dargestellt, bei der das Anbietersystem 210 eine zentrale Steuereinheit 216 umfaßt, die hier auf drei Datenbanken 214, 228 und 230 sowie ein Verschlüsselungsmodul 218 und ein Abrechnungsmodul 220 zugreifen kann.

Das in Fig. 3 gezeigte Nutzersystem 212 umfaßt einen PC 222 und drei Wiedergabegeräte 224, 232 und 234, die jeweils über eine Aufnahme für ein Identifikationsmodul verfügen, wobei jedoch nur in der Aufnahme des Wiedergabegerätes 224 ein Identifikationsmodul 226 vorhanden ist, während die Aufnahmen 236 und 238 leer sind. Die Internetverbindung zwischen Nutzersystem 212 und Anbietersystem 210 erfolgt über den PC 222 und die zentrale Steuereinheit 216.

Eine weitere, nicht gezeigte Ausführungsvariante sieht vor, daß ein Kunde über zwei oder mehr Nutzersysteme (zum Beispiel Autoradio mit Audiostream und Bürostereoanlage mit Festplatte) verfügen kann, wobei das ldentifikationsmodul oder ein auch als Wiedergabegerät dienendes Gerät wie ein Mobiltelefon beliebig in den verschiedenen Nutzersystemen zur Authentifizierung der Wiedergabeberechtigung einsetzbar ist. Beispielweise kann der Kunde über ein Mobiltelefon mit den Kundenidentifikationscode enthaltender SIM-Karte verfügen, das allein als Wiedergabegerät dienen kann, im Auto jedoch den Audiostream über Autoradio ermöglich, in dem es z.B. drahtlos über Bluetooth mit dem Autoradio gekoppelt wird, und im Büro die Wiedergabe von Mediadateien über PC erlaubt, in dem es z.B. drahtgebunden mit dem PC gekoppelt wird.

Die Erfindung basiert auf dem Grundgedanken, eine insbesondere über Internet übertragbare Mediadatei vor der Übertragung kundenspezifisch zu verschlüsseln, so daß sie nur von berechtigten Nutzern wiedergegeben werden kann und insbesondere nicht in frei kopierbarer Form übertragen wird. Für den Fachmann ist klar, daß die Umsetzung dieser allgemeinen Idee auf viele verschiedene Weisen erfolgen kann, insbesondere bei großen Mediadateien wie Filmen so, daß die verschlüsselte Mediadatei nicht oder zumindest nicht komplett über Internet übertragen, sondern auf einem Datenträger wie einer CD-Rom oder einer DVD gespeichert und dem anfordernden Kunden per Post übermittelt wird. Dabei ist dann natürlich auch möglich, die Anforderung in anderer Weise zu realisieren, z.B. über Telefon. Wichtig ist zum einen, daß das Nutzersystem für das Anbietersystem identifizierbar wird, wozu das ldentifikationsmodul mit dem Kundenidentifikationscode dient.

Bei der Ausführungsform, die in Fig. 1 schematisch dargestellt ist, ist für die Umsetzung der Erfindungsidee ein speziell ausgebildetes Wiedergabegerät vorgesehen, in das das Identifikationsmodul integriert ist. Mit dem Kauf eines solchen Wiedergabegerätes erhält der Käufer die Berechtigung zum Zugriff auf in einer oder mehreren Datenbanken anbietersystemseitig gespeicherte Mediadateien. Dabei kann sowohl vorgesehen sein, daß in dem Kaufpreis des Wiedergabegerätes bereits das Entgelt für das Herunterladen einer bestimmten Anzahl von Mediadateien enthalten ist, als auch, daß für jedes Herunterladen einer Mediadatei eine gesonderte Gebühr fällig wird. Der Einzug der Gebühren kann dann in an sich bekannter Weise z.B. über Kreditkarte erfolgen.

Damit anbietersystemseitig die Berechtigung eines Nutzersystems zum Anfordern von Mediadateien geprüft und insbesondere eine kundenspezifische Verschlüsselung der Mediadateien erfolgen kann, müssen bestimmte Kundendaten zunächst in einer Datenbank auf seiten des Anbietersystems registriert werden. Dazu ist bevorzugt vorgesehen, daß bereits vor dem Verkauf eines Identifikationsmoduls oder eines Wiedergabegeräts, in das ein Identifikationsmodeul schon integriert ist, ein das ldentifikationsmodul und damit das Nutzersystem identifizierender Code anbietersystemseitig hinterlegt ist. Beim Verkauf dieses ldentifikationsmoduls oder bei der ersten Nutzung können dann weitere Kundendaten, wie z.B. Name und Anschrift des Nutzers, Bankverbindungen und/oder Kreditkartendaten zur Abrechnung ggf. kostenpflichtig heruntergeladener Mediadateien anbietersystemseitig hinterlegt werden. Fordert der Kunde eine Mediadatei an, so wird diese bei der bevorzugten Ausführungsform kundenspezifisch derart verschlüsselt, daß sie nur auf einem Wiedergabegerät mit einem zur Entschlüsselung der Mediadatei berechtigenden Identifikationsmodul wiedergebbar ist. Bei einer bevorzugten Ausführungsform ist vorgesehen, daß das Gerät mit dem zur Entschlüsselung der Mediadatei berechtigenden ldentifikationsmodul mit einem Wiedergabegerät, zum Beispiel drahtlos oder drahtgebunden verbunden wird. Bei anderen Ausführungsformen kann vorgesehen sein, daß in den Kundendaten Informationen bzgl. der Nutzungsberechtigung derart hinterlegt ist, daß ein Kunde, der über mehrere ldentifikationsmodule verfügt, berechtigt ist, eine Mediadatei auf verschiedenen seiner Wiedergabegeräte wiederzugeben. Dabei erfolgt dann die kundenspezifische Verschlüsselung derart, daß ein Wiedergeben der Mediadatei nutzersystemseitig immer dann möglich ist, wenn eines der denjenigen Kunden, der die Mediadatei angefordert hat, identifizierenden Identifikationsmodule präsent ist.

Die kundenspezifische Verschlüsselung kann auf verschiedene Weisen erfolgen. Bei der bevorzugten Ausführungsform ist vorgesehen, daß in dem Identifikationsmodul zwei Codes gespeichert sind, von denen der eine zur Identifizierung des Kunden dient und an das Anbietersystem bei der Anforderung von Mediadateien übertragen wird. Der zweite in dem ldentifikationsmodul gespeicherte Code dient der Entschlüsselung der Mediadatei und wird nicht übertragen. Er ist jedoch vorzugsweise bereits vor dem Verkauf des ldentifikationsmoduls oder des mit dem ldentifikationsmodul ausgestatteten Wiedergabegerätes anbietersystemseitig hinterlegt worden, und wird dann anbietersystemseitig zur Verschlüsselung der Mediadatei verwendet. Wird dann von Unberechtigten die Kommunikation zwischen Nutzersystem und Anbietersystem mitverfolgt, so kann eine unberechtigt kopierte Mediadatei von dem Unberechtigten nicht geöffnet werden, da er lediglich über den Identifikationscode des Nutzersystems, nicht aber über den geheimen Entschlüsselungscode verfügt.

Im Rahmen des Erfindungsgedankens sind zahlreiche Abwandlungen und Weiterbildungen möglich, sich z.B. auf die Ausbildung des Wiedergabegerätes, des ldentifikationsmoduls und die Art der Verschlüsselung einer Mediadatei beziehen. Die Erfindung impliziert auch ein neues Geschäftsverfahren betreffend das Vertreiben und Anbieten von Mediadateien über Internet. Dabei können für die Kunden verschiedene Anreize geschaffen werden, Mediadateien kopier- und wiedergabegeschützt herunterzuladen. Abgesehen davon, daß mehr und mehr Kunden sich des Schadens bewußt werden, den die widerrechtliche Verbreitung urheberrechtlich geschützter Werke anrichtet, kann ein besonderer Anreiz zur Verwendung der erfindungsgemäßen Anordnung und des erfindungsgemäßen Verfahrens dadurch geschaffen werden, daß anbietersystemseitig bestimmte Mediadateien exklusiv für berechtigte Benutzer bereit gehalten werden, die anderweitig nicht verfügbar sind. Arbeitet ein Anbieter z.B. mit einem großen Musikverlag oder direkt mit einem Künstler zusammen, so können Werke, z.B. Musikstücke, produziert werden, die ausschließlich bei dem genannten Anbieter heruntergeladen werden können oder Konzerte exklusiv über sogennante "Live"-Streams ausgestrahlt werden.

Ein möglicher Ablauf zur Übertragung einer Mediadatei ist folgender: ein künftiger Kunde kauft ein erfindungsgemäß ausgebildetes Wiedergabegerät, in dem ein ldentifikationsmodul fest eingebaut ist, oder ein Identifikationsmodul für ein bereits vorhandenes Wiedergabegerät. In dem Identifikationsmodul sind in der oben beschriebenen Weise zwei Codes gespeichert, von denen der eine gewissermaßen als "öffentlicher Schlüssel" zur Identifizierung des Kunden dient und bei der Anforderung von Mediadateien übertragen wird, und von denen der andere als "geheimer Schlüssel" nur innerhalb des Wiedergabegerätes zur Entschlüsselung übertragener Mediadateien verwendet wird. Bei der ersten Inbetriebnahme des Wiedergabegerätes verbindet der Nutzer das Gerät z.B. mit einem PC und stellt z.B. über Internet eine Verbindung mit dem Anbietersystem her. Es kann vorgesehen sein, daß bereits bevor einem Kunden überhaupt verfügbare Mediadateien vom Anbietersystem angezeigt werden, eine Prüfung erfolgt, ob ein registriertes ldentifikationsmodul vorliegt. Das Wiedergabegerät dient in diesem Fall als Schlüssel zum Zugreifen auf einen entsprechenden Bestand von Mediadateien. Es kann aber auch vorgesehen sein, Informationen über die verfügbaren Mediadateien jedem Anfragenden zur Verfügung zu stellen, wobei natürlich eine Übermittlung nur dann erfolgt, wenn ein entsprechendes ldentifikationsmodul vorhanden ist. Auch kann vorgesehen sein, daß Mediadateien auch ohne ein entsprechendes ldentifikationsmodul heruntergeladen werden können, wobei diese dann z.B. nur einmal wiedergebbar sind. Dies kann den Anreiz, ein entsprechendes ldentifikationsmodul zu kaufen, erhöhen.

Hat der Kunde bei der ersten Nutzung des Wiedergabegerätes, in das ein ldentifikationsmodul eingebaut ist, oder des ldentifikationsmoduls für ein bereits vorhandenes Wiedergabegerät eine Verbindung mit dem Anbietersystem hergestellt, so werden zunächst bestimmte Kundendaten abgefragt, wie insbesondere Abrechnungsinformationen. Dieser Vorgang wird als Registrierung bezeichnet. Um den Kaufanreiz für ein entsprechendes Wiedergabegerät, in das ein Identifikationsmodul eingebaut ist, oder ein Identifikationsmodul für ein bereits vorhandenes Wiedergabegerät zu erhöhen, kann vorgesehen sein, daß mit dem Kaufpreis bereits eine Anzahl von Mediadateien abgegolten ist. In den Kundendaten können auch bevorzugte Nutzungsprofile hinterlegt werden, wie z.B. Musikrichtungen, die der Kunde bevorzugt, so daß bei nachfolgenden Verbindungen zwischen Nutzersystem und Anbietersystem direkt kundenspezifische Informationen bereitgestellt werden können, z.B. Informationen über neu verfügbare Mediadateien, die für Interesse für den speziellen Kunden sein könnten. Auch können kundenspezifische Informationen vom Wiedergabegerät selbst während der Verbindung zwischen Nutzersystem und Anbietersystem übertragen werden.

Ist der Registrierungsvorgang einmal abgeschlossen, kann der Kunde Mediadateien von dem Anwendersystem abfragen. Ist eine Internetverbindung zwischen Nutzersystem und Anbietersystem hergestellt, prüft das Anbietersystem zunächst das Vorhandensein des ldentifikationsmoduls und verschlüsselt dann, wenn der Kunde eine bestimmte Mediadatei anfordert, die Mediadatei kundenspezifisch, so daß sie nur wiedergegeben werden kann, wenn ein zur Entschlüsselung der Mediadatei berechtigendes ldentifikationsmodul präsent ist. Die Mediadatei ist damit zuverlässig vor unberechtigtem Kopieren geschützt, da eine kopierte Datei nicht wiedergebbar ist, wenn das berechtigende ldentifikationsmodul nicht vorhanden ist. Gleichzeitig werden Abrechnungsinformationen anbietersystemseitig aufgezeichnet, und zwar selbst dann, wenn die Mediadatei für den Kunden kostenfrei übermittelt wird. Solche Abrechnungsinformationen dienen unter anderem dazu, Urheberrechtsabgaben zu ermitteln und z.B. für den Fall, das ein ldentifikationsmodul unbrauchbar werden sollte, aufzuzeichnen, welche Mediadateien ein Kunde bereits erworben hat, so daß diese ihm ggf. kostenfrei erneut zur Verfügung gestellt werden können.

Wie oben ausgeführt, kann natürlich vorgesehen werden, daß einem Kunden mehrere ldentifikationsmodule zugeordnet werden, und die kundenspezifische Verschlüsselung dann so erfolgt, daß eine einmal heruntergeladene Mediadatei unter Verwendung eines beliebigen für den Kunden registrierten Identifikationsmoduls wiedergegeben werden kann.

## Patentansprüche

1. Anordnung zum Übertragen von Mediadateien insbesondere über Internet von einem Anbietersystem eines Anbieters von Mediadateien zu wenigstens einem Nutzersystem eines Kunden des Anbieters, umfassend
- ein Anbietersystem, das über Mediadateien und Kundendaten verfügt, wobei in den Kundendaten jedem Kunden wenigstens ein Kundenidentifikationscode und eine bestimmte Nutzungsberechtigung zugeordnet sind, und
- wenigstens ein Nutzersystem mit mindestens einem ldentifikationsmodul, in dem ein Kundenidentifikationscode gespeichert ist, wobei das Nutzersystem zum Anfordern und Empfangen von Mediadateien mit dem Anbietersystem insbesondere über Internet verbindbar ist,
**dadurch gekennzeichnet,**
- **daß** das Anbietersystem dazu ausgebildet, bei Anforderung einer Mediadatei seitens eines Nutzersystems den Kundenidentifikationscode von dem wenigstens einen ldentifikationsmodul abzufragen, und ein Verschlüsselungsmodul umfaßt, mittels welchem eine von einem Nutzersystem angeforderte Mediadatei vor der Übertragung an das anfordernde Nutzersystem kundenspezifisch verschlüsselbar ist,
- wobei das Verschlüsselungsmodul dazu ausgebildet ist, die kundenspezifische Verschlüsselung einer angeforderten Mediadatei so auszuführen, daß die Mediadatei nur dann nutzersystemseitig wiedergegeben werden kann, wenn eine zur Entschlüsselung der Mediadatei berechtigende Smartcard präsent ist.

2. Anordnung nach Anspruch 1, **dadurch gekennzeichnet, daß** das ldentifikationsmodul eine Smartcard ist, und zwar insbesondere eine SIM-Karte, vorzugsweise eine SIM-Karte, die auch zur Nutzung eines Mobilfunknetzes berechtigt.

3. Anordnung nach Anspruch 1 oder 2, **dadurch gekennzeichnet, daß** ein und demselben Kunden mehrere Identifikationsmodule zugeordnet sind, die jeweils zur Entschlüsselung einer unter Verwendung eines der mehreren Identifikationsmodule angeforderten kundenspezifisch verschlüsselten Mediadatei berechtigen.

4. Anordnung nach einem der Ansprüche 1 bis 3, wobei das Nutzersystem ein Wiedergabegerät für eine übertragene Mediadatei umfaßt, **dadurch gekennzeichnet, daß** das Wiedergabegerät eine Aufnahme für ein zur Entschlüsselung der Mediadatei berechtigendes ldentifikationsmodul umfaßt, wobei das Wiedergabegerät vorzugsweise als insbesondere zur direkten Herstellung einer Verbindung mit dem Anbietersystem geeignetes Mobiltelefon ausgebildet ist.

5. Anordnung nach einem der Ansprüche 1 bis 4, wobei das Nutzersystem ein Wiedergabegerät für eine übertragene Mediadatei umfaßt, **dadurch gekennzeichnet, daß** das Wiedergabegerät vorzugsweise als PC ausgebildet und drahtlos oder drahtgebunden mit einem ein zur Entschlüsselung der Mediadatei berechtigendes ldentifikationsmodul enthaltenden Gerät, insbesondere einem Mobiltelefon koppelbar ist.

6. Anordnung nach einem der Ansprüche 1 bis 5, **dadurch gekennzeichnet, daß** in dem ldentifikationsmodul wenigstens zwei Codes gespeichert sind, von denen einer als Kundenidentifikationscode beliebig auslesbar ist und beim Anfordern von Mediadateien übertragbar ist, und von denen der andere zur Verschlüsselung und Entschlüsselung der Mediadatei dient, vor unberechtigtem Auslesen geschützt ist und beim Anfordern von Mediadateien nicht übertragen wird.

7. Verfahren zum Übertragen von Mediadateien insbesondere über Internet von einem Anbietersystem eines Anbieters von Mediadateien zu wenigstens einem Nutzersystem eines Kunden des Anbieters,
- wobei das Anbietersystem über Mediadateien und Kundendaten verfügt, wobei in den Kundendaten jedem Kunden wenigstens ein Kundenidentifikationscode und eine bestimmte Nutzungsberechtigung zugeordnet sind, und
- wobei das Nutzersystem wenigstens ein ldentifikationsmodul umfaßt, in dem ein Kundenidentifikationscode gespeichert ist,
- wobei das Nutzersystem zum Anfordern und Empfangen von Mediadateien mit dem Anbietersystem insbesondere über Internet verbunden wird,
**dadurch gekennzeichnet,**
- **daß** das Anbietersystem vor der Übertragung einer Mediadatei an ein die Mediadatei anforderndes Nutzersystem den in dem wenigstens einen ldentifikationsmodul des Nutzersystems gespeicherten Kundenidentifikationscode abfragt und die angeforderte Mediadatei vor der Übertragung an das anfordernde Nutzersystem kundenspezifisch verschlüsselt,
- wobei die kundenspezifische Verschlüsselung einer angeforderten Mediadatei so ausgeführt wird, daß die Mediadatei nur dann nutzersystemseitig wiedergegeben werden kann, wenn ein zur Entschlüsselung der Mediadatei berechtigendes Identifikationsmodul präsent ist.

8. Verfahren nach Anspruch 7, **dadurch gekennzeichnet, daß** anbietersystemseitig der Kundenidentifikationscode geprüft wird, bevor einem anfragenden Nutzersystem eine Liste verfügbarer Mediadateien angezeigt wird.

9. Verfahren nach Anspruch 7 oder 8, **dadurch gekennzeichnet, daß** anbietersystemseitig Abrechnungsinformationen betreffend die Übertragung von Mediadateien aufgezeichnet werden.

10. Verfahren nach einem der Ansprüche 7 bis 9, **dadurch gekennzeichnet, daß** die kundenspezifische Verschlüsselung einer angeforderten Mediadatei so erfolgt, daß die Mediadatei nutzersystemseitig nur dann wiedergeben werden kann, wenn dasjenige ldentifikationsmodul präsent ist, das beim Anfordern der Mediadatei verwendet wurde.

11. Verfahren nach einem der Ansprüche 7 bis 9, wobei einem Kunden des Anbieters mehrere Identifikationsmodule zugeordnet sind, **dadurch gekennzeichnet, daß** die kundenspezifische Verschlüsselung einer angeforderten Mediadatei so erfolgt, daß die Mediadatei nutzersystemseitig nur dann wiedergeben werden kann, wenn eines der ldentifikationsmodul desjenigen Kunden präsent ist, der die Mediadatei angefordert hat.

12. Verfahren nach einem der Ansprüche 7 bis 11, **dadurch gekennzeichnet, daß** in dem ldentifikationsmodul wenigstens zwei Codes gespeichert werden, von denen einer als den Kunden identifizierender Kundenidentifikationscode verwendet und beim Anfordern von Mediadateien an das Anbietersystem übertragen wird, und von denen der andere zur Verschlüsselung und Entschlüsselung der Mediadatei verwendet wird, vor unberechtigtem Auslesen geschützt ist und beim Anfordern von Mediadateien nicht übertragen wird.

13. Verfahren nach einem der Ansprüche 7 bis 12, **dadurch gekennzeichnet, daß** beim Anbietersystem angeforderte Mediadateien ab einer vordefinierten Größe entweder in Teilen an das Nutzersystem übertragen oder auf Datenträgern wie insbesondere CD-Rom oder DVD gespeichert übermittelt werden.

14. Wiedergabegerät zur Wiedergabe kopiergeschützter Mediadateien, die mittels einer Anordnung nach einem der Ansprüche 1 bis 6 und/oder mittels eines Verfahrens nach einem der Ansprüche 7 bis 13 übermittelt wurden, umfassend einen Speicher für kopiergeschützte Mediadateien und ein ldentifikationsmodul, in dem ein Kundenidentifikationscode gespeichert ist.

15. Wiedergabegerät nach Anspruch 14, **dadurch gekennzeichnet, daß** das Wiedergabegerät dazu ausgebildet ist, direkt eine Internetverbindung mit dem Anbietersystem herzustellen und/oder über eine Mobiltelefonfunktion verfügt.
